(19) Europäisches Patentamt
European Patent Office
Office européen des brevets

(11) **EP 2 242 264 A1**

(12) **EUROPEAN PATENT APPLICATION**

(43) Date of publication:
**20.10.2010 Bulletin 2010/42**

(51) Int Cl.:
***H04N 7/01*** *(2006.01)*

(21) Application number: **09157923.5**

(22) Date of filing: **15.04.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **NXP B.V.**<br>**5656 AG Eindhoven (NL)** | (72) Inventors:<br>• **Melters, Marcel**<br>  **5656  AE  Eindhoven (NL)**<br>• **de Greef, Pierre**<br>  **5656  AE  Eindhoven (NL)**<br><br>(74) Representative: **Schouten, Marcus Maria et al**<br>  **NXP B.V.**<br>  **IP & L Department**<br>  **High Tech Campus 32**<br>  **5656 AE Eindhoven (NL)** |

(54) **Video processing device**

(57)   A video processing device is provided. The video processing device comprises a frame rate detection unit (FRD) for detecting a frame rate of an input video sequence (IVS). The video processing device furthermore comprises a motion estimator (ME) for determining at least one motion vector (MV) based on a current frame (crt) and a previous frame (prev).

The video processing device furthermore comprises an up-converter unit (UCU) for performing an up-conversion based on the motion vectors (MV), a current frame (crt) and/or a previous frame (prev).

Fig. 8

EP 2 242 264 A1

**Description**

FIELD OF THE INVENTION

The present invention relates to a video processing device.

BACKGROUND OF THE INVENTION

Many video processing techniques apply temporal processing like a temporal upscaling or a motion compensation to video input data. Here, temporal information for an area in an image, e.g. a block of pixels in a previous image, can be used during the processing of a current image. Cases can occur where the parameters for the temporal upscaling are not known or may vary over time. A motion vector relates to the amount of movement of objects between subsequent input frames or two input images. To determine these motion vectors, the temporal position of the input images which need to be compared must be known. A typical motion estimation is based on the fact that the elapsed time between two input images is constant. If the input video signal comprises 15 images per second, the elapsed time is $1/15^{th}$s. In other words, the motion vectors can relate to the speed of the moving objects in the image. In particular, the motion vectors can represent the distance that objects have travelled in the elapsed time between two input images.

However, in display devices, the refresh frame rate is typically set higher than 15Hz, e.g. to 40Hz in order to prevent flicker artefacts. This can for example be performed by repeating an image until a new image is available from the input video data. Therefore, if the input video data has an image rate of 15Hz and the refresh frame rate is 60Hz, each input image is repeated four times before a new image is replayed. For the motion estimation, only original images should be used as the repeated frames do not contain motion information. This can be performed by ignoring the repeated frames for the Motion Estimation process. Accurate Motion Compensation will only work without problems if the ratio between the original images and the repeated frames is an integer number and is known. It should be noted that also cases can occur where the ratio is a non-integer number or where the ratio is not known beforehand. If the ratio between the original images and the repeated frames is a non-integer value, then the number of Motion Compensated interpolated fields for each new input image will not be constant, i.e. some frames can be repeated three times, four times or five times. It should further be noted that the motion estimation can miss a source image due to a frame-drop and use frame copies as replacement. This can lead to artefacts on the screen, i.e. objects have moved twice as far as intended. Moreover, if an image is repeated for example five times, a situation may occur where two images which are used for the motion estimation are identical. Accordingly, no motion will be detected such that the vector field will be discarded.

A method to detect whether incoming frames comprise new video images or merely contain a repeat of previous video images can be based on the recognition that if an incoming video frame is identical to the previous image. Therefore, instead of relying on a fixed ratio between new images and repeated images, the presence of a new image must be detected locally. Such an image detection can be performed as a film mode detection. Hence, pixel values are summed horizontally and vertically such that a signature of the frame is created. After the signature has been determined, it is compared to the signature of the previous one. However, it should be noted that this method is not suitable for mobile or low power applications.

SUMMARY OF THE INVENTION

It is therefore an object of the invention to provide a video processing device which can deal with an unknown frame rate.

This object is solved by a video processing device according to claim 1 and a method according to claim 8.

Therefore, a video processing device is provided. The video processing device comprises a frame rate detection unit for detecting a frame rate of an input video sequence. The video processing device furthermore comprises a motion estimator for determining at least one motion vector based on a current frame and a previous frame. The video processing device furthermore comprises an up-converter unit for performing an up-conversion based on the motion vectors, a current frame and/or a previous frame.

According to a further aspect of the invention, the frame rate detection unit is adapted to determine whether a current frame corresponds to a next frame. If the frame rate detection unit detects that the current frame corresponds to a previous frame in the input video sequence, the frame rate detection unit forwards this information to the motion estimator to control determining the motion vectors.

According to a further aspect of the invention, the up-conversion unit is adapted to perform an up-conversion of the input video sequence at a time position creating an integer number of interpolated fields as output signal.

According to a further aspect of the invention, the frame rate detection unit is adapted to detect the input video screen image rate and to output a video stream render ratio forwarding this information to the up-conversion unit.

According to a further aspect of the invention, the frame rate detection unit comprises a phase lock loop controlling the timing of the output video frames related to the input frames.

According to a further aspect of the invention, the up-conversion unit is adapted to perform an up-conversion of the input video sequence at the time position creating any input-rate to output-rate ratio interpolation as output signal.

According to a further aspect of the invention, the up-conversion unit is adapted to copy original input fields of the input video sequence instead of interpolated fields when the time position is close to the time of the original image controlled by a programmable parameter.

The invention also relates to a method of video processing comprising the step of detecting a frame rate of an input video sequence, determining at least one motion vector based on a current frame and a previous frame and performing an up-conversion based on the motion vectors, a current frame and/or a previous frame.

The invention relates to the idea determine which input frames contain new images, by using only those images for the motion estimation, by determining the frame ratio of the input signal and use this information to calculate intermediate frames as accurately as possible for Motion Compensation.

Further aspects of the invention are defined in the dependent claims.

BRIEF DESCRIPTION OF THE DRAWINGS

Embodiments and advantages of the present invention will now be described in more detail with reference to the Figures.

Fig. 1 shows a schematic representation to determine whether an incoming even video frame is identical to the previous odd video frame according to a first embodiment,
Fig. 2 shows a schematic representation of a method for determining whether any input video frame is identical to its previous frame,
Fig. 3 shows a schematic representation of an improved method of determining whether any incoming frame is identical to its previous frame according to a third embodiment,
Fig. 4 shows a schematic representation a sequence of incoming frames according to a fourth embodiment,
Fig. 5 shows a schematic representation a sequence of incoming frames according to a fifth embodiment,
Fig. 6 shows a schematic representation a sequence of a method of determining an optimal temporal position for an interpolated frame according to sixth embodiment,
Fig. 7 shows a schematic representation of a sequence of incoming frames, where an original image has been dropped, and a method of handling missing frames according to a seventh embodiment,
Fig. 8 shows a schematic representation of a video processing device according to an eighth embodiment,
Fig. 9 shows part of a video processing device according to a ninth embodiment, and
Fig. 10 shows a graph depicting a representation of a clock module according to a tenth embodiment.

DETAILED DESCRIPTION OF EMBODIMENTS

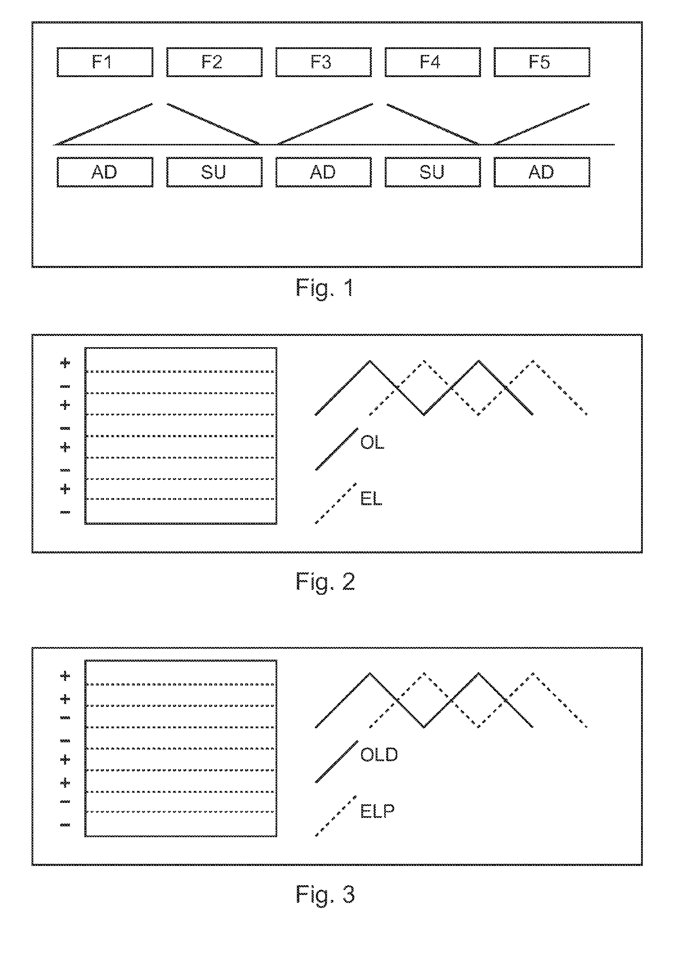

Fig. 1 shows a schematic representation to determine whether an incoming video frame is identical to a previous video frame according to a first embodiment. In Fig. 1, five frames F1 - F5 are depicted. According to the first embodiment, the pixels in the first incoming frame F1 are a summed AD and the pixels in the second incoming frame F2 are subtracted SU from the summed first frames. The pixels in third incoming frame F3 are a summed AD and the pixels of the fourth incoming frame F4 are subtracted SU from the summed third frames. The pixels in the fifth incoming frame F5 are summed AD. If the results are zero or close to zero, the lines in the frames are identical. Accordingly, instead of two horizontal and two vertical arrays as according to the prior art, the first embodiment only requires one horizontal and one vertical array. The advantage of this first embodiment is a lower design complexity and lower clock cycles as well as a smaller buffer memory. However, at the end of the second frame F2, only the information is present whether the second frame is identical to the first frame F1, but this information will not be present at the end of the third frame F3, as the third frame F3 will be compared to the fourth frame F4.

Fig. 2 shows a schematic representation of a method of determining whether an incoming frame is identical to a previous one. According to the second embodiment, the adding and subtracting of every line of the video data is alternated. Hence, the odd lines OL will have information with respect to the frame 1 - 2, 3 - 4, etc. and the even lines EL will have information about 2 - 3, 4 - 5, etc.

Fig. 3 shows a schematic representation of a method of determining whether an incoming frame is identical to a previous one according to a third embodiment. According to the third embodiment, two subsequent lines are added and two subsequent lines are subtracted from the added lines. Accordingly, odd line pairs OLP and even line pairs ELP can be provided. The implementation according to the third embodiment is advantageous in particular with respect to interlaced video material. The method according to the second embodiment can have a limited effect as the interlaced video frames may interfere with the detection mechanism. With the method according to the third embodiment, it is still possible to detect small moving objects with sufficient spatial resolution. The output of the method according to the second or third embodiment may provide a flag indicating whether or not a new image is received in an incoming framebuffer or a copy of the previous frame was received. This flag may be used to trigger a motion estimator to determine the new motion vectors based on the newly received image and the previously received image.

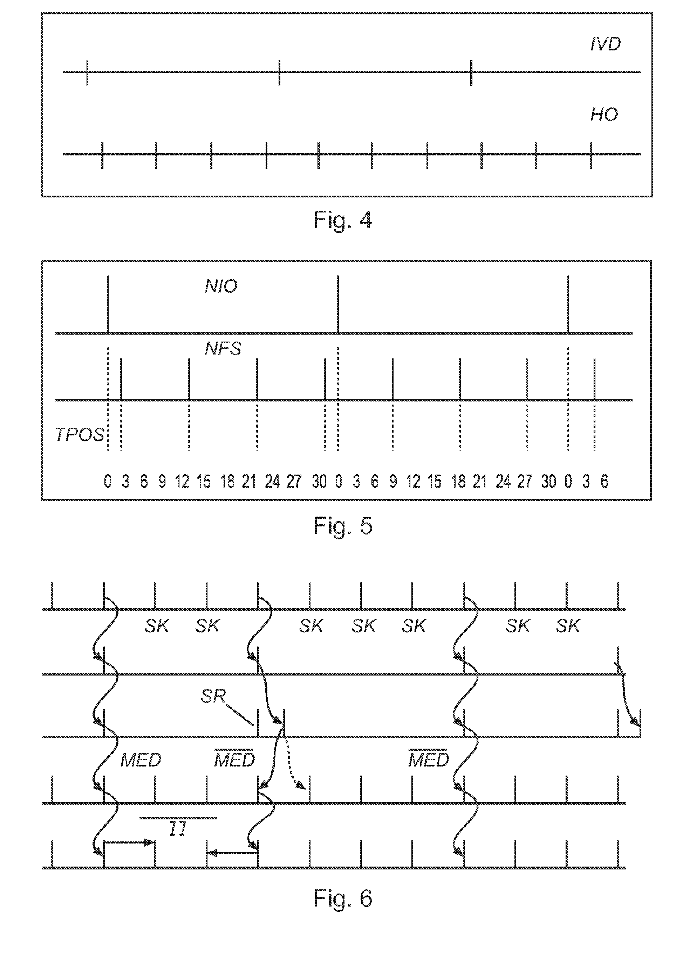

Fig. 4 shows a schematic representation of incoming frames according to a fourth embodiment. In the top part of Fig. 4, the image video data IVD is depicted with a constant frame rate of 15 frames per second. The lower part of Fig. 4 shows a host output, i.e. the rendering video data RVD of a video processing device which may be 50 frames per second to render the input video image on a display. The simplest way to create the extra video fields for rendering is duplicating of the last image which has been received. A video codec typically takes care of this. Alternatively intermediate video fields can be calculated which have a correct time-position, based upon the process of motion estimation and motion compensation.

It should be noted that once the image video data IVD is converted to the rendering video data RVD, there is no indication when the actual new images appear in the video stream. A video stream which has already been rendered using image copies, can still be converted into a video stream with motion compensated interpolated fields. For an accurate motion compensation for each of the input frames it must be determined whether it comprises a new video image. In addition, it must be known which temporal positions are to be used for calculating the interpolated spatial content of the inserted frames.

The output of the second or third embodiment is only related to the presence of a new image in a video frame. However, it is not able to determine the input image rate. As an example, if the input image rate is 15Hz and the original source frame rate is 50Hz, the final image rate will toggle between 50/3 (16,6Hz) and 50/4 (12,5 Hz).

The output of the method according to the second or third embodiment can be forwarded to a digital PLL. The digital PLL controls a local oscillator to generate a stable signal for the new image. This signal is frequency and phase locked to the actual source image frequency. The local oscillator is set to generate a frequency around the expected image rate. The local oscillator serves to SET a flip flop and the signal of a new image as output of the detector according to the second or third embodiment is used to CLEAR the flip flop. The output of the flip flop will have a 50% duty cycle if the frequency of the local oscillator corresponds to the frequency of the image rate and if it is 180° out of phase with respect to the signal of the new image. If the duty cycle is more than 50%, the local oscillator is slowed down. A duty cycle of more than 50% is present if the SET signal is early. If the duty cycle is less than 50%, i.e. the SET signal is late, the frequency of the local oscillator is increased.

The duty cycle of the output of the flip flop can be achieved by start counting clock pulses on the rising edge of the flip flop and by incrementing a counter on the falling edge of the flip flop when the output is high and decrement the counter when the output is low. If the final value is positive, the duty cycle is greater than 50%, if the final value is negative, the duty cycle is less than 50%. The local oscillator can be adjusted by the scaled and clipped final value of the counter.

Accordingly, the digital PLL can provide a temporal position for each frame which needs to be inserted. If a motion compensation uses 32 temporal positions between original images, an oscillator running at 32 x the source image rate can drive the counter to select temporal positions which are to be used. When a new image arrives, the counter is reset.

Fig. 5 shows a schematic representation of incoming frames according to a fifth embodiment. According to the situation depicted in Fig. 5, on the top part of Fig. 5, new image oscillation NIO is depicted and in the middle part of Fig. 5 new frame signals NFS are depicted. A first new frame signal is rendered at the first frame, i.e. the TPOS counter is at the $4/32^{th}$ position. This counter serves to indicate the interpolation ratio between any previous and current image. In Fig. 5 as an example, the second frame should be interpolated at $13/3^{th}$ of the current image plus $19/32^{th}$ of the previous image. The original image is played at the $4/32^{th}$ position without interpolation. The original image should be played at least once in order to allow the motion estimator to access the frame buffers. Accordingly, as the original image is only played at the $4/32^{th}$ position, the original image is played too late as its position would be the position zero. Thereafter, the interpolated frames are delayed and a are played later than at their original position. This can be performed by subtracting the value of the TPOS counter which relates to the position where the first frame arrived from all other intermediate positions. The remaining frames can be played at $22/32^{th}$ and $31/32^{th}$ ratio.

According to an example of the fifth embodiment, it relates to the idea to monitor when a new image arrive. This can correspond to a frame which arrives after the counter TPOS is zero. If the detector flags an incoming frame as a new image, it is stored in the current image buffer and the content of the current frame buffer is stored in the previous frame buffer. Next the motion estimation process is started, to determine the motion vectors related to these two frames. Finally the motion compensation process can generate new images for the relevant timing positions.

It is possible that the image detector does not recognize an expected next image. If the detector does not flag an incoming frame as a new image, it can be assumed that the new image will correspond to the current image. Hence, the current image can be played until a further frame is identified as new image, which will change the intermediate processing back to regular processing.

When it is expected that the new image will be more that one frame late, a signal indicating a new image can be generated independent of the detector. This is, however, dangerous as it can destroy the vector field.

Alternatively, if it is expected that the new image will be more that one frame late, the vector field can be extrapolated and frames using ratios of 39/32 of the current and 7/32 of the previous image can be played.

Fig. 6 shows a schematic representation of a method of determining an optimal temporal position for an interpolated frame according to sixth embodiment.

In the following, the synchronization to the image source is described in more detail.

With the detection possibilities according to the previous embodiments, it is possible to determine when a new image should appear. Accordingly, temporally correct intermediate frames can be generated for any image rate with respect to any render rate, as the ratio can be detected. It is now possible to determine if a new image will appear within a certain margin around the predicted time.

Low frame-rate video data is typically a subsampled version of a 50 or 60 images per second original video stream. When this subsample ratio is not an integer value, the period corresponding to each image will be different. When the video stream is reconstructed, the original timing of the video-data should be reconstructed as accurate as possible. Once the original time-stamps of the input images is determined, the missing field can be interpolated as close as possible to their original timing. For non-integer subsampling ratios, either 2 or 3 fields may need to be interpolated.

A discontinuity may occur in the motion vectors if a image drop occurs. Such a discontinuity can be perceived as a scene change causing the motion estimation algorithm to discard the vector field. If it is known previously when a image has been dropped, such a dropped frame can be compensated for example by scaling up the vector field by two. This can in particular be performed by scaling up the number of missed frames plus one. The scaled vector field can be used to find new candidate vectors for the motion estimator.

The local image rate oscillator can be used to predict an appearance of the next new image. However, if this new frame does not contain a new image as expected, the current image can be played without an interpolation, i.e. it will correspond to 100% of the current image. The current image will correspond to the last new image that appeared in the video stream.

Alternatively, the next frame is forced to be accepted as a new image, i.e. the current image is moved to the previous buffer.

If the next frame has been inputted, it needs to be decided whether this frame is actually the new image. If it is the new image, the interpolation can be started again. However, if it is not the new image, the last image is repeated and the vector field is scaled up to generate adapted vector candidates for the next motion estimation cycle. It should be noted that the elapsed time between the two source images will be twice as high as one image was lost in the encoder.

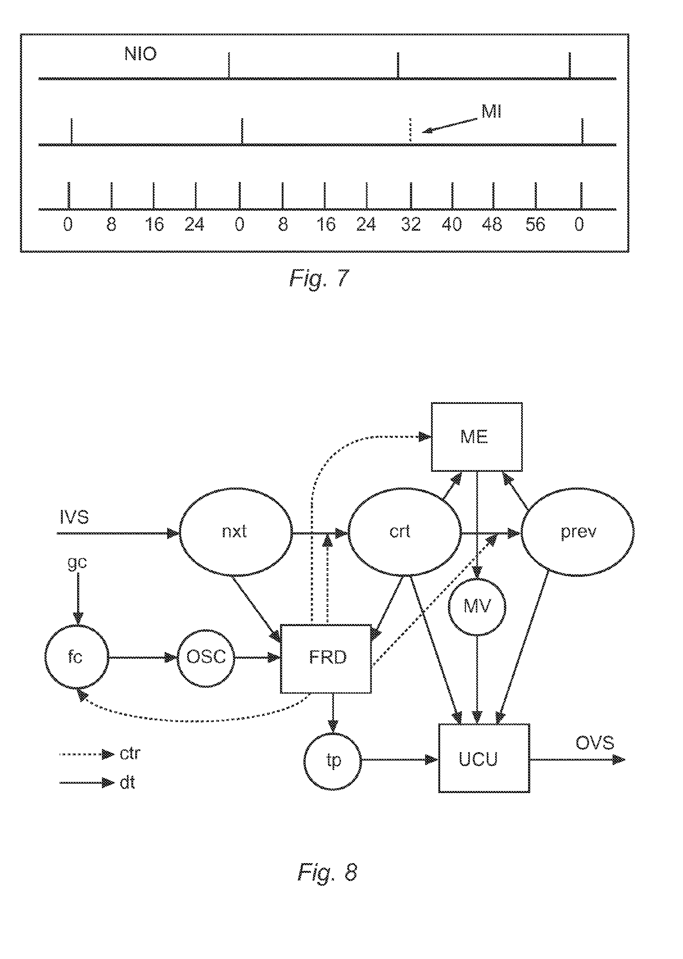

Fig. 7 shows a schematic representation of a method of handling a missing image according to a seventh embodiment. On the top of Fig. 7, the new image oscillator NIO is depicted and below, a missing image MI is depicted. It should be noted that the TPOS counter should never reach a value greater than 31 as a new image will reset the phase counter. However, if the counter exceeds 31, it can indicate that an image has been missed. In this situation, the previous image is replayed and the vector field for the motion estimation can be scaled up to twice its size to determine the new candidates.

In the following, numerically controlled oscillators are described. According to the above embodiments, a high source clock frequency is required to have the best possible resolution of the oscillator. It should be noted that the highest available clock frequency is the pixel clock, i.e. it is used for the generation of some of the frequencies.

However, it should be noted that the frequency of the pixel clock may not be known. However, it should be noted that the frequency of the clock is a constant frequency. On the other hand, the frequency itself is not important as the main interest point is the image frame ratio.

The number of pixel clocks can be counted between two consecutive frames or between a rising and falling edge of the data enable system which can indicate the line width.

Fig. 8 shows a schematic representation of a video processing device according to an eighth embodiment. The video processing device according to an eighth embodiment comprises a motion estimator ME, an up-converter unit UCU and a frame rate detection unit FRD. The video processing device receives an input video sequence IVS. The next nxt, the current crt and the previous prev frames are stored in at least one buffer. The video processing device furthermore receives a global clock gc from which a frame clock fc is derived. The frame clock is forwarded to an oscillator OSC. The output of the oscillator OSC is inputted to the frame rate detection FRD. The frame rate detection unit FRD outputs a time position, which is also inputted to the up-converter UCU. The output of the up-converter UCU is the output video sequence OVS. The motion estimator ME receives the current and the previous frame crt, prev and outputs the motion vectors MV. The motion estimator also receives control data ctr from the frame rate detection unit FRD.

It should be noted that in Fig. 8 the dotted lines refer to control data ctr and the straight lines refer to data dt. Every incoming frame which is part of the input video sequence IVS is stored in the nxt frame buffer and will be compared to the image in the current frame buffer crt. In other words, it is determined whether a new frame represents a new image.

If the content of the nxt frame buffer is not equal to the content of the current frame buffer, then a new image has been received and a new set of motion vectors can be calculated. In this case, the current frame crt will be passed to the buffer of the previous frame prev and the next frame nxt will be forwarded to the buffer of the current frame crt. Consecutively, new motion estimation vectors can be calculated based on the current and previous frame, furthermore the previous frame prev can be rendered to the display.

If the current frame however equals the previous frame, no new motion vectors are calculated. In this case, the current frame crt and previous frame prev and motion vector memory are used to calculate a motion compensated frame which can be rendered to the display.

Optionally, every incoming frame can receive a time stamp. The time stamp can be derived from the global clock GC, i.e. the pixel clock. The time stamp may be a relative time position between two adjacent frames.

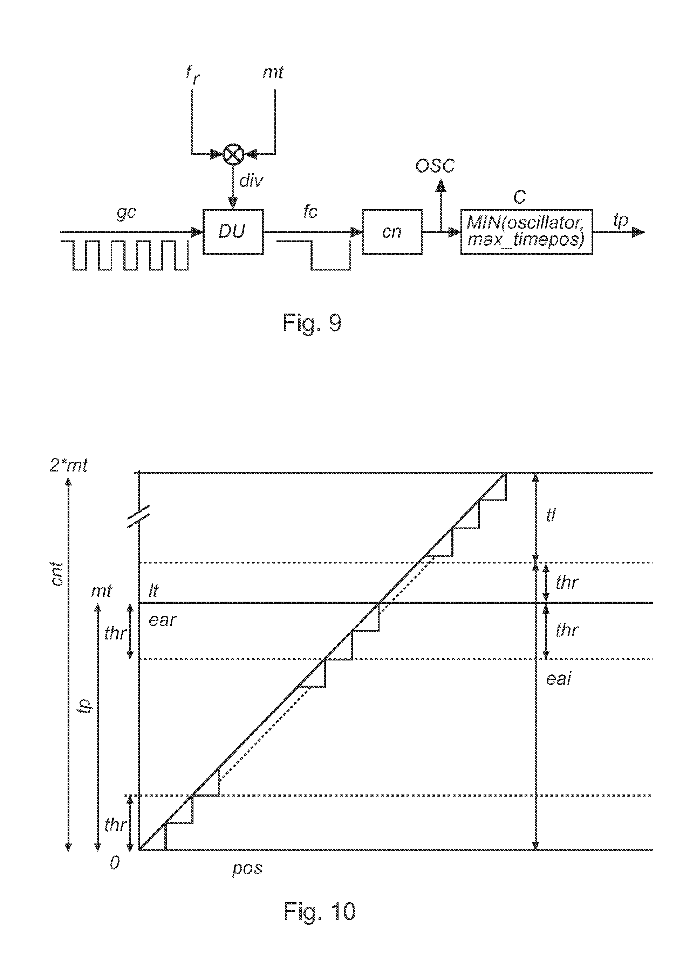

Fig. 9 shows part of a video processing device according to a ninth embodiment. The global clock gc is inputted to the divider unit DU which also receives the frame rate fr and the maximum time position mt. The output of the divider is the frame clock fc. The frame clock is inputted to a counter unit cn. The output of the counter unit cn corresponds to the oscillator osc and is inputted to a comparison unit C. The output of the comparison unit C corresponds to the time position tp.

Fig. 10 shows a graph depicting a representation of a clock module according to a tenth embodiment. On the horizontal axes the position of a moving object is represented, divided into 32 segments/input image, at the vertical axes the time is represented. At time=0, a new image is detected at position 0. Some time later a new image is detected, at a new position.

Once both the new time and position are known temporal interpolation can generated intermediate images at a timing resolution of 32 equidistant timing intervals. Depending on the moment the new images arrives, the frame rate detector FRD will take specific action. The time position tp is a value from 0 to 31 and indicates the relative time position between two frames. The maximum time position mt corresponds to the size of the time position interval. According to the ninth embodiment, the maximum time position corresponds to 32. The value of the oscillator osc corresponds to a counter value cnt arranging from 0 to 2x the maximum time position mt. The global clock gc has a fixed frequency. The frame rate fr corresponds to the frame rate of a image video data. The frame clock fc corresponds to a clock divider on the global clock. The frame clock frequency corresponds to the frame rate times the maximum time position mt. It defines the time instance at which an interpolation could be performed in order to generate an interpolated video frame. Below and above the maximum time position mt, a threshold thr is defined. Below the maximum time position mt minus the threshold thr (early ear), the expected arrival interval eai is defined. Above the maximum time position mt plus threshold thr, a region is defined where a reception is too late tl.

If according to the eight embodiment the image related to the new input frame does not correspond to the current image, the frame buffers are swapped, the previous frame is replayed and a motion estimation is performed. Then a new expected arrival time of the following frame is calculated. Thereafter, the oscillator counter is reset and the value of the time position tp is set to 0.

If the image related to the new input frame is a repetition of the current image and the value of the oscillator counter is below the (maximum time position - thr), then a motion compensated frame is calculated and can be rendered to the display. If the time position is larger than the (maximum time position - thr) and smaller than the (maximum time position + thr), the current frame is played. Here, the programmable thr value indicates a preference of the sharpness of original images over interpolated images. Thereafter, the expected arrival time of the next frame is calculated.

If the image related to the new input frame is a repetition of the current image and if the value of the oscillator counter is larger than the maximum time position, an image repeat may have occurred unexpectedly. Here, the current image is repeated at the output, a new expected arrival time is calculated and the value of the oscillator and the time position tp is set to 0. Optionally, the quality may be improved by adjusting the vector field for example x2 and an extrapolated motion estimation at a time position tp corresponding to the value of the oscillator can be performed.

For each new input frame the difference between the actual arrival time at and the expected arrival time eat is determined to obtain a correction cor = at - eat. If the correction cor is larger than 0, then the frame has arrived too late. If the correction cor is smaller than 0, then the frame has arrived too early.

Thereafter, a filtering may be performed in order to prevent instability in the feedback. Such an instability may arise if the arrival of a frame is too late or too early. Accordingly, the filtering may be performed based on the following equation:

$$\text{filtered\_correction}=(((\text{I\_factor}-1)*\text{filtered correction} + \text{correction}) / \text{I\_factor})$$

$$\text{MOD}(mt).$$

In the divider unit DU, a new value of the divider can be calculated as follows:

$$divider\ div=(f\_in * width * height)/(f\_r * (mt - filtered\_correction)).$$

The arrival time of the next frame can be estimated as follows:

$$eat=(at+(f\_r * mt)/f\_in)MOD(2 * mt).$$

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

Furthermore, any reference signs in the claims shall not be constrained as limiting the scope of the claims.

**Claims**

1. Video processing device, comprising:

   - a frame rate detection unit (FRD) for detecting a frame rate of an input video sequence (IVS),
   - a motion estimator (ME) for determining at least one motion vector (MV) based on a current frame (crt) and/or a previous frame (prev), and
   - an up-converter unit (UCU) for performing an up-conversion based on the motion vectors (MV), a current frame (crt) and/or a previous frame (prev).

2. Video processing device according to claim 1, wherein the frame rate detection unit (FRD) is adapted to determine whether a current frame (crt) corresponds to a next frame (nxt), wherein if the frame rate detection unit (FRD) detects that the current frame corresponds to the previous frame in the input video sequence (IVS), the frame rate detection unit (FRD) forwards this information to the motion estimator (ME), to control determining the motion vectors.

3. Video processing device according to claim 1 or 2, wherein the up-conversion unit (UCU) is adapted to perform an up-conversion of the input video sequence (IVS) at a time position (tp) creating an integer number of interpolated fields as output signal (OVS).

4. Video processing device according to any one of the claims 1 to 3, wherein the frame rate detection unit (FRD) is adapted to detect the input video stream (IVS) image rate to output video stream (OVS) render rate ratio forwarding this information to the up-conversion unit (UCU).

5. Video processing device according to any one of the claims 1 to 4, wherein the frame rate detection unit (FRD) comprises a phase locked loop (PLL) controlling the timing of the output video frames (OVS) related to the input frames (IVS).

6. Video processing device according to any one of the claims 1 to 5, wherein the up conversion unit (UCU) is adapted to perform an up-conversion of the input video sequence (IVS) at the time position (tp) creating any input-rate to output-rate ratio interpolation as output signal (OVS).

7. Video processing device according to any one of the claims 1 to 6, wherein the up conversion unit (UCU) is adapted to copy original input fields of the input video sequence (IVS) instead of interpolated fields, when the time position (tp) is close to the time of the original image controlled by a programmable parameter.

8. Method of video processing, comprising the steps of:

- detecting a frame rate of an input video sequence,
- determining at least one motion vector (MV) based on a current frame (crt) and a previous frame (prev) by means of a motion estimator (ME) and
- performing an up-conversion based on the motion vectors, the current frame (crt) and/or a previous frame (prev).

EP 2 242 264 A1

Fig. 1

Fig. 2

Fig. 3

9

Fig. 4

Fig. 5

TPOS 0 3 6 9 12 15 18 21 24 27 30 0 3 6 9 12 15 18 21 24 27 30 0 3 6

NIO

NFS

SK SK SK SK SK SK SK

SR

MED $\overline{MED}$ $\overline{MED}$

$\overline{TT}$

Fig. 6

Fig. 7

Fig. 8

Fig. 9

Fig. 10

Europäisches
Patentamt

European
Patent Office

Office européen
des brevets

# EUROPEAN SEARCH REPORT

Application Number

EP 09 15 7923

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/083156 A (ADVANCED MICRO DEVICES INC [US]; DOSWALD DANIEL [DE] BROADCOM CORP [US) 10 July 2008 (2008-07-10) * the whole document * | 1-8 | INV. H04N7/01 |
| A | EP 0 963 120 A (GEN INSTRUMENT CORP [US]) 8 December 1999 (1999-12-08) * abstract * * paragraph [0019] * | 1-8 | |
| A | WO 2005/107255 A (ATI TECHNOLOGIES INC [CA]; ATI INT SRL [BB]; NG PATRICK CHE WA [CA]; D) 10 November 2005 (2005-11-10) * the whole document * | 1-8 | |
| A | US 2008/291326 A1 (SHISHIDO TOMOYUKI [JP] ET AL) 27 November 2008 (2008-11-27) * abstract * | 1-8 | |
| A | WATKINSON J: "The Engineer's Guide to Motion Compensation" INTERNET CITATION, [Online] 1 January 1994 (1994-01-01), pages I-III, XP002537476 Retrieved from the Internet: URL:http://www.snellgroup.com/documents/engineering-guides/emotion.pdf>> [retrieved on 2009-07-21] * page 14 - page 16 * | 1-8 | TECHNICAL FIELDS SEARCHED (IPC) H04N |

The present search report has been drawn up for all claims

| Place of search | Date of completion of the search | Examiner |
|---|---|---|
| Berlin | 26 October 2009 | Blais, Denis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 15 7923

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2009

| Patent document cited in search report | | Publication date | Patent family member(s) | | Publication date |
|---|---|---|---|---|---|
| WO 2008083156 | A | 10-07-2008 | US | 2008151109 A1 | 26-06-2008 |
| EP 0963120 | A | 08-12-1999 | CN | 1237854 A | 08-12-1999 |
| | | | JP | 2000041225 A | 08-02-2000 |
| | | | KR | 20000005800 A | 25-01-2000 |
| | | | TW | 416238 B | 21-12-2000 |
| | | | US | 6108046 A | 22-08-2000 |
| WO 2005107255 | A | 10-11-2005 | EP | 1743482 A1 | 17-01-2007 |
| | | | US | 2005243215 A1 | 03-11-2005 |
| US 2008291326 | A1 | 27-11-2008 | EP | 2017816 A2 | 21-01-2009 |
| | | | KR | 20080102960 A | 26-11-2008 |

EPO FORM P0459

For more details about this annex : see Official Journal of the European Patent Office, No. 12/82